Europäisches Patentamt

European Patent Office

Office européen des brevets

(11) Publication number: **0 405 642 A2**

# EUROPEAN PATENT APPLICATION

(21) Application number: 90201559.3

(22) Date of filing: 18.06.90

(51) Int. Cl.⁵: **B30B 9/22**, B30B 9/26

(30) Priority: 29.06.89 IT 4685689

(43) Date of publication of application:
02.01.91 Bulletin 91/01

(84) Designated Contracting States:
AT BE CH DE DK ES FR GB GR IT LI LU NL SE

(71) Applicant: STATION OENOTECHNIQUE DE CHAMPAGNE
B. P. 1031
F-51318 Epernay Cédex(FR)

Applicant: DEFRANCESCHI S.P.A.
Zona Artigianale-Industriale, 11

I-39051 Bronzolo (Bolzano)(IT)

(72) Inventor: Lebarbier, Jean-Marie
12 Rue Malakoff
F-51200 Epernay(FR)
Inventor: Garavini, Daniele
V. Le Baccarini, 19 I-48020 Sant'Agata Sul Santerno (Ravenna)(IT)

(74) Representative: Corradini, Corrado et al
Studio Ing. C. CORRADINI & C. S.r.l. 4, Via Dante Alighierieri
I-42100 Reggio Emilia(IT)

(54) **Membrane press with large drainage surface.**

(57) A membrane press comprises a horizontal cylindrical vessel (1) rotating about its longitudinal axis and divided into two diametrically opposing parts (10, 11) by a deformable membrane (4), in front of which there is removably provided a continuous and regular drainage surface (6) parallel to and at a short distance from the inner surface of the vessel. The drainage surface has a circumferential extension of about 90° and is supported by the vessel wall via a back lattice support element (63).

FIG. 1

## MEMBRANE PRESS WITH LARGE DRAINAGE SURFACE

This invention relates to improvements in membrane presses in general.

It is well known that such membrane presses comprise a horizontal cylindrical vessel rotating about its longitudinal axis and divided into two diametrically opposing parts by a deformable membrane which is peripherally fixed in a sealed manner in proximity to the vessel axis.

One part of the vessel is intended to receive a pressurized fluid such as air, whereas the other part of the vessel is intended to receive the product to be pressed.

One known method for collecting the pressed juice is to fix on the inner surface of the vessel a ·series of perforated longitudinal channels with a relatively small cross-section, for example of rectangular shape, which at one end are connected to an external manifold for collecting the juice.

However, this method has proved unsatisfactory because it is particularly difficult to remove and clean said channels, with the result that one or more channels may retain residual juice or solid material which give rise to fermentation during the period in which the press is inactive, such fermentation damaging the juice which is obtained when the press is again operated.

In another known method, the juice draining is via the vessel wall itself, a region of which is provided with a plurality of small apertures.

Although this other known method allows the drainage surface to be washed in a simple and complete manner, it has the drawback that the juice comes into contact with the air and undergoes oxidation, the undesirability of which increases with the quality of the product being processed.

The main object of the present invention is to provide a membrane press which obviates the aforesaid within the context of a simple, rational and reliable arrangement.

This object is attained according to the invention by a substantially regular and continuous drainage surface located in front of the membrane parallel to and at a short distance from the inner cylindrical surface of the vessel, against which it rests via a back lattice element which allows the juice to pass towards an external collection nozzle.

Specifically, said drainage surface, which can be one or more adjacent convex sectors removably fixed to the vessel, has a length practically equal to that of the cylindrical shell of the vessel, and a circumferential extension of at least 90° symmetrically about the middle generator of that part of the vessel which is to contain the product to be pressed. In addition, in the same region of the vessel and to the side of said surface there is provided at least ohe aperture in a position diametrically opposite the port for loading the product, in order to remove that part of the juice which is present already in the product as it is loaded.

The characteristics and constructional merits of the invention will be apparent from the detailed description given hereinafter with reference to the accompanying figures which show a preferred embodiment thereof by way of non-limiting example.

Figure 1 is a schematic perspective view of the invention with parts cut away to better show parts which would otherwise be invisible.

Figure 2 is a perspective view to an enlarged scale showing a part of the drainage surface according to the invention.

Figure 3 is a section on the line III-III of Figure 1 to an enlarged scale.

Figure 4 shows the circled part IV of Figure 3 to a greatly enlarged scale.

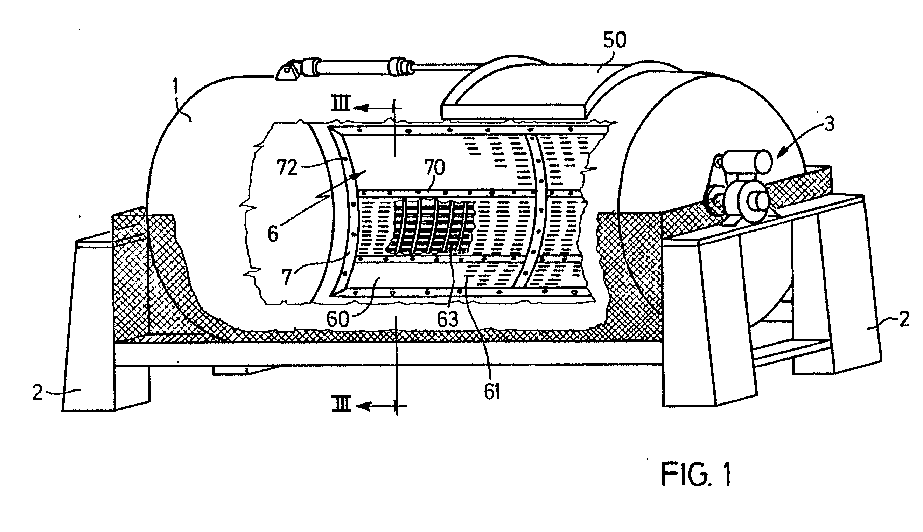

Said figures, and in particular Figure 1, show a cylindrical vessel 1 of horizontal axis rotatably mounted on two opposing feet or uprights 2.

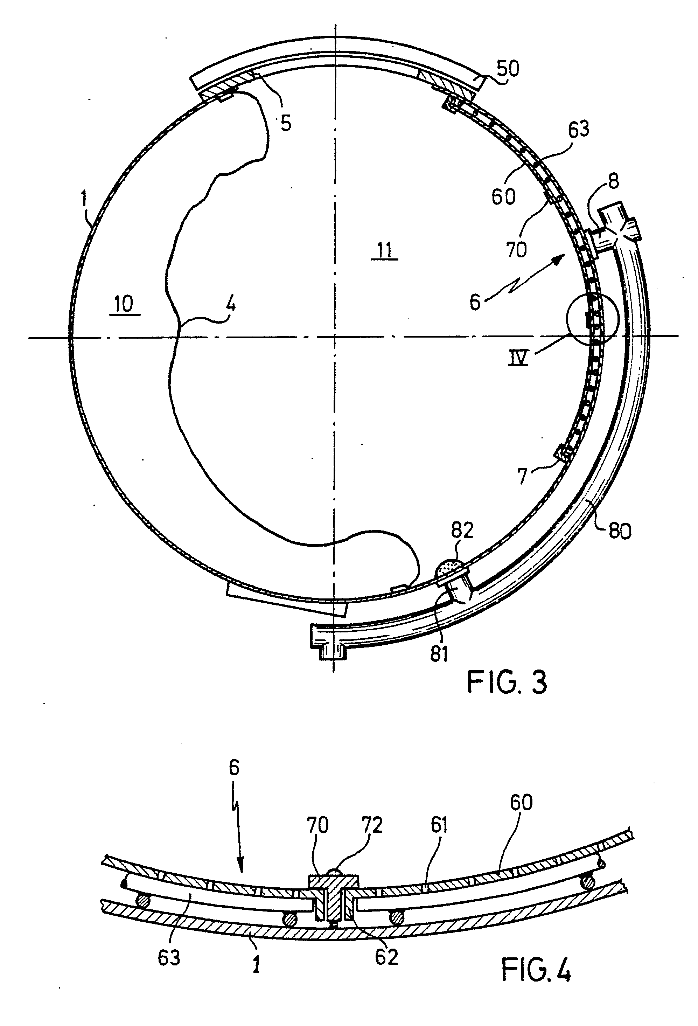

The vessel 1 is rotated about its axis by a drive unit 3 (see Figure 1) and is divided into two diametrically opposite parts 10 and 11 by a deformable membrane 4 (see Figure 3) of known type.

In that part 11 of the vessel 1 which is to receive the product to be pressed, and shown to the right in Figure 3, there is provided at least one port 5 for loading said product and for discharging the dregs.

With said at least one loading and discharge port 5 there is associated a convenient door 50, said port 5 being located in proximity to the region in which the membrane 4 is fixed to the vessel 1.

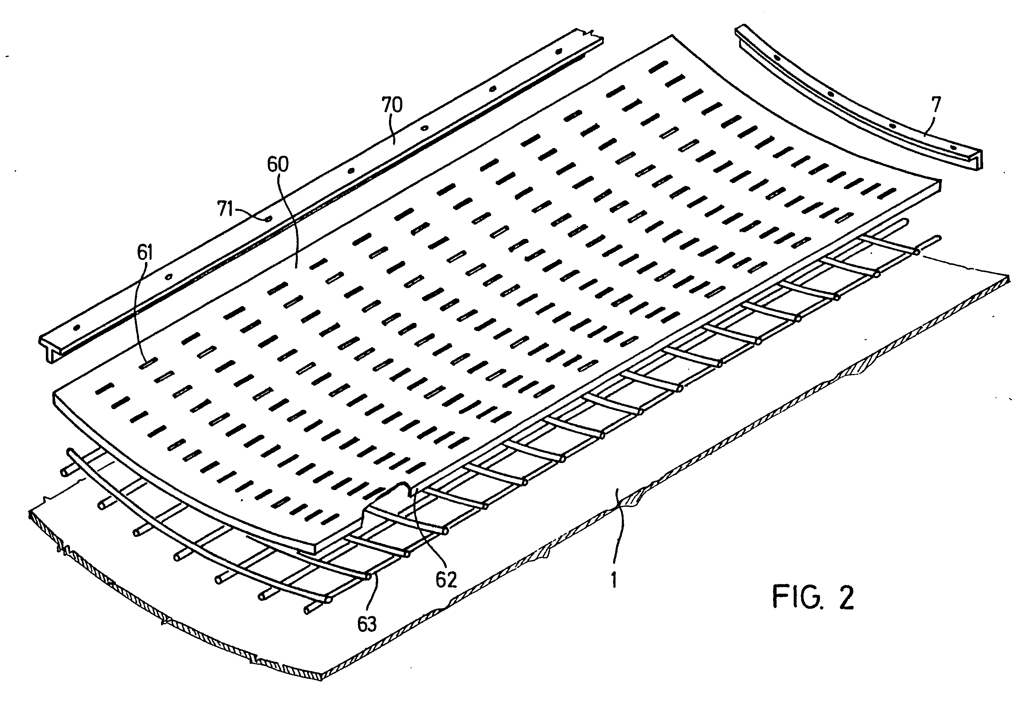

In the part 11 of the vessel 1 there is removably fixed a drainage surface 6 having the same curvature as the inner surface of the vessel (Figure 3) and a length practically equal to that of the cylindrical shell of the vessel 1 (Figure 1), it extending circumferentially through substantially 90° (Figure 2).

Specifically, the transverse dimension of said drainage surface 6 is symmetrical about the middle generator of the part 11 of the vessel 1. As can be seen in Figures 1 and 2, the drainage surface comprises a series of adjacent convex sectors 60 each in the form of a segment of a cylindrical surface, they consisting of a thin plate of suitable material such as stainless steel.

In each sector 60 there is provided a plurality of small uniformly distributed slots 61, the corresponding plate having its perimetral edges 62 bent through a right angle towards the vessel wall.

In addition, with each sector 60 there is associated a back support element 63 consisting of an electrically welded mesh of stainless steel rods, also in the form of a segment of a cylindrical surface (Figure 2).

Said layer 63 is received between the bent edges 62 of the corresponding sector 60, said bent edges 62 having a height slightly less than the thickness of the layer 63.

This is to provide constant communication between the rear regions of adjacent sectors 60 (see Figure 4).

Said sectors 60 are fixed to the vessel 1 by a grid of elements which for the outer edges of the drainage surface 6 are in the form of L-shaped bars 7, whereas for the facing edges of adjacent sectors 60 are in the form of T-shaped bars 70. The central flange of said bars 70 has a height preferably less than the total height of said sector 60 plus said layer 63 (see Figure 4).

Alternatively, said central flange can comprise covenient end recesses or transverse holes for the passage of the juice from one sector 60 to another.

Finally, those flanges of said bars which are perpendicular to the wall of the vessel 1 are provided with through holes 71 (Figure 2) to receive corresponding fixing screws 72 (Figure 4), whereas those flanges of said bars which are parallel to said wall clamp the underlying edges of the sectors 60 against said wall.

Said bars 7 and 70 can be of combination type in the sense of having that flange perpendicular to the vessel directly fixed onto this latter, for example welded, and the flange perpendicular to the preceding bolted thereon.

As shown in Figure 3, in that region of the vessel 1 associated with the drainage surface 6 there is provided at least one outlet nozzle 8 for the juice, connected to the discharge manifold 80. This latter is provided with at least one further nozzle 81 which opens via a perforated disc 82 into a point of that part 11 of the vessel 1 which is substantially diametrically opposite the loading and discharge port 5, close to the fixing edge of the membrane 4.

The purpose of said at least one further nozzle 81 is to discharge that part of the juice which is already present in the product on being loaded, and to enable air to enter the part 11 of the vessel without it passing to drain when deflating the membrane.

Suitable valve means are obviously provided to shut off that part of the manifold 80 connected to the nozzle 8, during said air entry.

It should also be noted that the particular configuration and arrangement of the drainage surface 6 mean that it is constantly covered by a product layer of sufficient thickness to prevent the air which enters the part 11 of the vessel reaching the drainage surface 6.

Finally, said drainage surface 6 is easy both to remove and to clean.

The invention is not limited to the single embodiment described and illustrated, but comprises all technical equivalents of the aforesaid means and their combinations, provided they are implemented within the context of the following claims.

## Claims

1. A membrane press, of the type comprising a horizontal cylindrical vessel (1) rotating about its longitudinal axis and divided into two diametrically opposing parts (10, 11) by a deformable membrane (4), characterised by comprising a regular and continuous drainage surface which:
- is removably located in front of the membrane parallel to and at a short distance from the inner cylindrical surface of the vessel,
- has a circumferential extension of about $90^{\circ}$ and a length practically equal to that of the cylindrical shell of the vessel, and
- is supported by a hack grid-like support element (63) arranged to allow the juice to flow towards a collection manifold (80) therefor.

2. A press as claimed in claim 1, characterised in that the transverse dimension of said drainage surface (6) exactly straddles the median generating line of the vessel part (11) which receives the product to be pressed.

3. A press as claimed in the preceding claims, characterised in that said drainage surface (6) comprises a series of side-by-side sectors (60) with which means for their fixing to the vessel are peripherally associated, each sector consisting of a perforated stainless steel sheet in the form of a cylindrical surface segment, with its perimetral edges (62) bent at a right angle towards the vessel wall.

4. A press as claimed in claims 1 and 3, characterised in that said element (63) comprises a series of layers of electrowelded stainless steel mesh, each to be received between the bent edges (62) of said sectors (60) and having a thickness slightly greater than the height of said bent edges.

5. A press as claimed in the preceding claims, characterised in that said means for fixing said sectors (60) comprise L-shaped edge bars (7) and T-shaped intermediate bars (70), the former to clamp the outer edges of the drainage surface (6) and the latter to clamp the mutually facing edges of side-by-side pairs of said sectors (60), said bars (7) and (70) being provided with through fixing screws.

6. A press as claimed in claim 5, characterised in that the central flange of said intermediate bars (70) comprises apertures to allow the juice to pass from one sector (60) to another.

7. A press as claimed in claim 1, characterised in that in the part (11) of the vessel there is provided in proximity to the fixing edge of the membrane (4) at least one aperture external to the drainage surface and substantially diametrically opposite the loading port (5) for the product to be pressed, said at least one aperture being connected to said manifold (80), in which valve means are connected between said drainage surface (6) and said at least one aperture.

FIG. 1

FIG. 2

FIG. 3

FIG. 4